# FASCICULE DE BREVET EUROPEEN

(11) **EP 0 872 374 B1**
(45) Date de publication et mention de la délivrance du brevet: **13.02.2008**
(21) Numéro de dépôt: 98420064.2
(22) Date de dépôt: 10.04.1998
(51) Int. Cl.: B60L 5/20

(54) **Frotteur en carbone à détecteur d'avaries fonctionnant sous alimentation électrique à intensite elevée**
Kohleschleifleiste mit Fehlersensor der funktioniert bei Speisung mit hochintensiven Elektrizität
Carbon friction strip with fault detector functioning when supplying high intensity electricity

(30) Priorité: 14.04.1997 FR 9704790
(43) Date de publication de la demande: 21.10.1998
(73) Titulaire: Carbone Lorraine Applications Electriques, 80080 Amiens (FR)
(72) Inventeur: Basche, Bernd, 80000 Amiens (FR); Guyot, Frédéric, 57000 Metz (FR)
(74) Mandataire: Fénot, Dominique

(56) Documents cités:
- WO-A-90/13453
- DE-A- 4 425 460

## Description

### Domaine de l'invention

L'invention concerne les frotteurs en carbone à détecteur d'avaries, parfois désignés aussi sous d'autres vocables tels que « bande de frottement » ou encore « archet pour pantographe ». Ces frotteurs sont utilisés pour transférer l'énergie électrique entre un moyen fixe de distribution de l'énergie électrique, typiquement un câble caténaire, et un appareil mobile consommateur d'énergie électrique, typiquement une voiture de traction électrique de train, qui est muni d'un pantographe portant ledit frotteur en carbone moyennant un étrier fixé audit pantographe.

### Etat de la technique

On connaît déjà un certain nombre de brevets décrivant des frotteurs en carbone comportant un dispositif de détection d'avaries. Le frotteur comprend un étrier et une bande d'usure généralement munie sur sa surface intérieure d'une rainure contenant ou formant une enceinte longitudinale étanche contenant un fluide, de sorte que, en cas d'usure excessive ou en cas de rupture de ladite bande d'usure, il y ait perte d'étanchéité de ladite enceinte entraînant une fuite ou un changement de pression dudit fluide, la détection de la fuite ou du changement de pression dans ladite enceinte provoquant le retrait du pantographe et dudit frotteur avant tout endommagement excessif des moyens de transfert d'énergie, en particulier avant tout endommagement du fil ou câble caténaire.

Dans le brevet anglais GB 1 374 972, ladite enceinte est un tube qui est en caoutchouc silicone, ou en d'autres matériaux notamment plastiques tels que le PTFE pouvant résister à une température de fonctionnement de, par exemple, 200°C.

Dans le brevet français FR-A1-2 663 592 au nom de la demanderesse, ladite enceinte est un tube en matériau carboné présentant les mêmes caractéristiques mécaniques que celles de ladite bande d'usure, de manière à améliorer la sensibilité de détection, notamment celle de l'apparition de fissures dans ladite bande d'usure.

Dans le brevet US 5,189,903 (= EP 415 972), ladite enceinte est formée par les parois de ladite rainure rendues étanches grâce à une couche d'étanchéité et grâce à un dépôt galvanique de cuivre sur la base de ladite bande d'usure et de ladite rainure.

Dans le brevet européen EP-A1-402 666, ladite enceinte est formée par la paroi supérieure de ladite rainure rendue étanche grâce à une résine, et par un profilé métallique en A1 ou Cu ou alliages ouvert à sa partie supérieure.

### Problème posé

La demanderesse a observé deux types de problèmes, lors de l'utilisation de frotteurs selon l'état de la technique et notamment de ceux obtenus selon le brevet français FR-A1-2 663 592, à savoir d'une part une trop grande sensibilité à l'apparition de fissures dans ladite bande d'usure, et d'autre part une inadaptation à une distribution d'énergie électrique à basse tension (mais à haute intensité).

En effet, il est apparu d'une part qu'il pouvait se produire des détections intempestives suite à une apparition d'une fissure dans ladite bande d'usure, mais sans que pour autant ladite bande d'usure soit hors d'usage, ce qui constitue aussi un défaut rédhibitoire, car il n'est pas acceptable qu'un train soit arrêté en rase campagne suite à l'apparition d'une simple fissure dans la bande d'usure, toute fissure n'évoluant pas automatiquement et rapidement vers un endommagement ou un risque d'endommagement justifiant le changement du frotteur, un tel endommagement étant typiquement constitué par la rupture de la bande d'usure et la séparation de blocs de matière carbonée constituant ladite bande d'usure.

D'autre part, il est apparu, notamment avec les trains à grande vitesse transeuropéens, que les frotteurs de l'état de la technique n'étaient pas adaptés à tous les types de distributions d'énergie électrique des différents pays traversés, et notamment pas adaptés à une alimentation électrique à basse tension relative, par exemple 1,5 kV (mais à haute intensité, par exemple 1100 A ou plus). En effet, dans ce dernier cas, et notamment avec les frotteurs obtenus selon le brevet français FR-A1-2 663 592, il a été observé une très forte élévation de la température du frotteur, température pouvant atteindre, voire dépasser 500°C, ce qui semble dommageable à la durée de vie des frotteurs, à la solidité de la liaison entre ladite bande d'usure et l'étrier (soudure, collage, etc...), et en conséquence à la conduction de courant électrique entre bande d'usure et l'étrier, étrier dont le rôle est non seulement de servir de support à ladite bande d'usure, mais aussi le plus souvent d'assurer la conduction de courant électrique entre la bande d'usure et l'entrée du circuit d'alimentation des moteurs dans la voiture de traction.

L'objet de la présente invention est donc un frotteur en carbone avec détecteur d'avarie ou d'usure, qui ne soit pas sensible aux simples fissures et qui soit adapté à différentes alimentations électriques et notamment à une alimentation à basse tension, et donc à haute intensité, en particulier dans le cas de trains à grande vitesse (TGV) transeuropéens.

Par ailleurs, le frotteur selon l'invention doit satisfaire à d'autres critères ou contraintes imposées par l'utilisation, notamment de poids et d'aérodynamique, pour que le frotteur ait un comportement stable à toute vitesse, et en particulier à très grande vitesse.

### Description de l'invention

Selon l'invention, le frotteur en carbone à détecteur d'avaries servant au transfert d'énergie d'un fil caténaire à un matériel roulant, comprend une bande d'usure montée sur un étrier fixé à un pantographe, ladite bande d'usure comprenant du graphite et étant munie d'une enceinte longitudinale étanche contenant un fluide reliée à un dispositif de détection de sorte que, en cas d'usure excessive ou en cas de rupture de ladite bande d'usure, il y ait rupture ou perçage de ladite enceinte entraînant un changement de pression dudit fluide, la détection de ce changement provoquant le retrait du pantographe et de l'étrier supportant ladite bande d'usure avant tout endommagement excessif des moyens de transfert d'énergie et notamment du fil caténaire, et est caractérisé en ce que ladite enceinte longitudinale est constituée par un profilé tubulaire étanche en un matériau stable thermiquement au moins jusqu'à 400°C, de dureté inférieure à 4 (échelle de Moh), et de conductivité électrique au moins supérieure à celle du graphite, de manière à servir de conducteur électrique lors du transfert d'énergie électrique de ladite bande d'usure audit matériel roulant.

L'invention peut donc se définir par l'utilisation, pour former ledit profil étanche, de tout matériau présentant la combinaison des caractéristiques précitées. Cette combinaison de moyens est essentielle pour résoudre le problème posé.

En effet, la demanderesse a testé de nombreuses configurations de frotteurs, basées sur l'état de la technique, mais elle n'a réussi à résoudre le problème posé que lorsqu'elle a eu l'idée d'une part d'utiliser ledit profilé comme un conducteur électrique à conductivité élevée de manière à dériver une partie du courant à travers ledit profilé et ainsi à diminuer les contraintes thermiques de ladite bande d'usure, et d'autre part de hiérarchiser les problèmes en privilégiant d'abord la protection du fil caténaire et la détection des seuls défauts pouvant mettre en péril le fil caténaire.

La demanderesse s'est donc écartée délibérément de l'approche habituelle consistant à vouloir détecter aussitôt que possible les fissures pouvant apparaître dans ladite bande d'usure.

### Description des figures

Toutes les figures correspondent à des frotteurs selon l'invention.

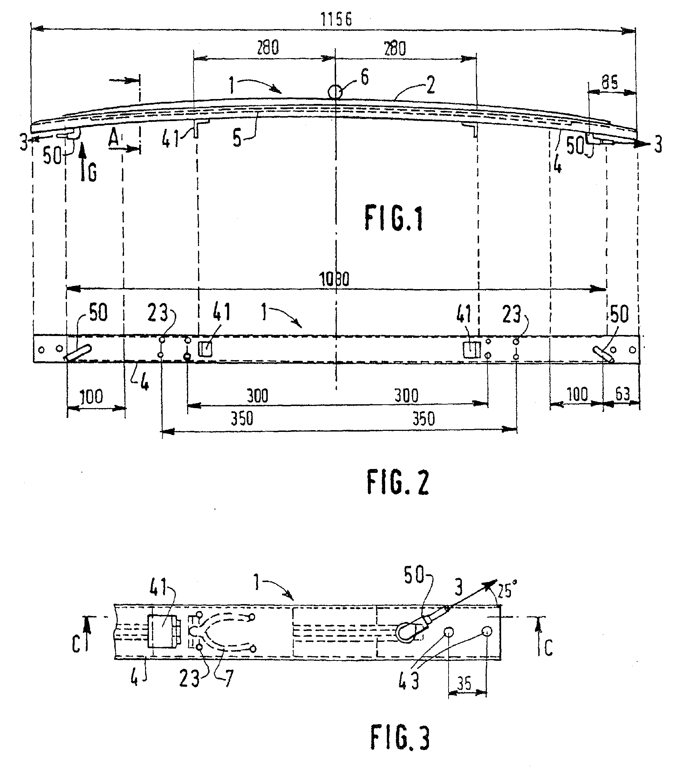

La figure 1 est une vue en coupe longitudinale du frotteur (1) - coupe dans le sens vertical qui permet de voir sa courbure (rayon de courbure de 9,965 m). Sur la figure 1 est porté, en pointillés, le profilé (5) dont chaque extrémité est munie d'un coude de raccordement (50) au dispositif de détection (3) non représenté. Le repère 6 de la figure 1 correspond au fil caténaire.

La figure 2 est une vue correspondante de dessous (vue selon la direction G de la figure 1). L'étrier (4) a une longueur de 1,156 m. La bande d'usure a une longueur de 1,030 m et présente une épaisseur allant en diminuant à chaque extrémité, sur 100 mm.

On voit sur les figures 1 et 2 la position des deux coudes de raccordement (50) et celle des pattes de fixation (41) de l'étrier (4) au pantographe (non représenté). On voit sur la figure 2 la position des huit trous de scellement (23) dans lesquels sont fixés les câbles conducteurs de courant (non représentés sur cette figure).

La figure 3 est une vue de dessous partielle agrandie de l'extrémité du frotteur (1) selon la figure 2, sur laquelle on a représenté des moyens complémentaires (43) de fixation de l'étrier (4) au pantographe, ainsi que, en pointillés, les câbles conducteurs (7).

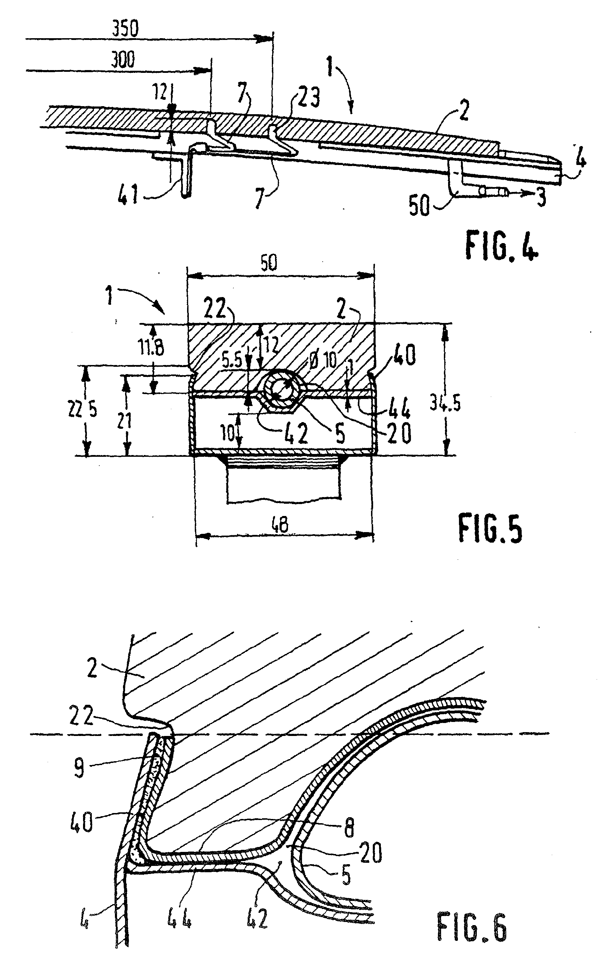

La figure 4 est une vue en coupe longitudinale partielle selon l'axe CC de la figure 3 qui illustre la disposition des câbles conducteurs (7) fixés à la bande d'usure (2) par des trous de scellement (23). Ces câbles conducteurs sont connectés aux pattes métalliques (41) de l'étrier (4).

La figure 5 est une vue en coupe transversale du frotteur (1) selon la direction A-A de la figure 1. Cette figure illustre d'une part, le mode d'assemblage de la bande d'usure (2) avec l'étrier (4), grâce à la coopération d'une bordure longitudinale de sertissage (22) de la bande d'usure (2) avec le rebord (40) de l'étrier (4), et d'autre part, le coincement du profilé (5) dans une rainure (20) de la bande d'usure (2) et dans une gorge longitudinale (42) de la base (44) de l'étrier (4).

La figure 6 est une vue partielle agrandie de la figure 5. Sur cette figure, la bande d'usure (2) est revêtue sur sa partie inférieure d'une couche métallique mince (8) (dépôt électrolytique de cuivre) d'une épaisseur typique de 10 µm, de manière à pouvoir souder la base de ladite bande d'usure (2) au rebord (40) de l'étrier (4), grâce à une soudure (9).

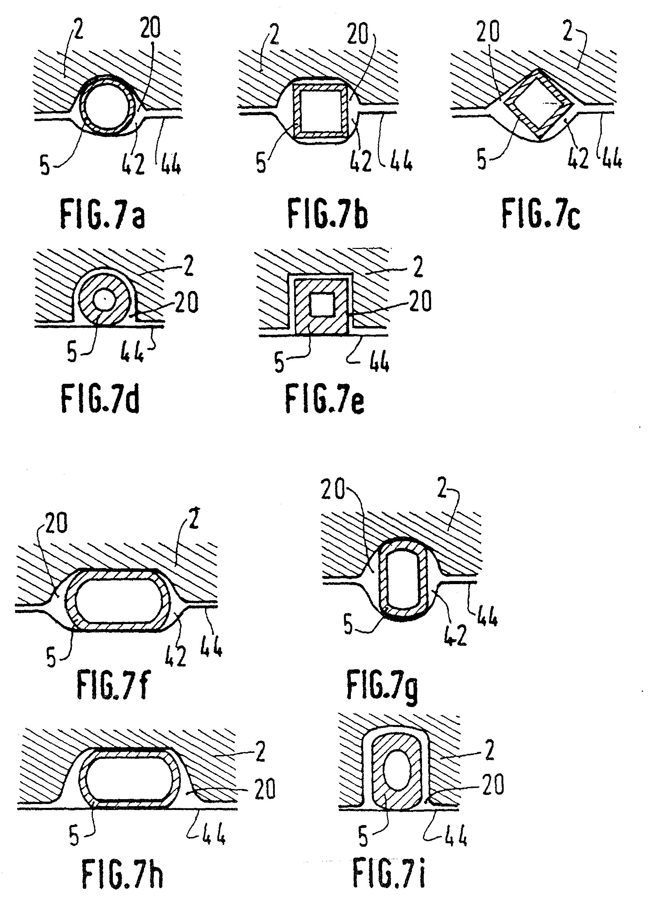

Les figures 7a à 7i illustrent différentes modalités de l'invention, différant tant par la forme, la section dudit profilé (5), que par la forme correspondante de la rainure (20) de la bande d'usure (2), par la présence ou non d'une gorge longitudinale (42) sur la base (44) de l'étrier (4), ou encore par l'épaisseur du profilé (5) - profilé plus épais aux figures 7d, 7e et 7i.

### Description détaillée de l'invention

Selon l'invention, ledit profilé (5) est, de préférence, un tube métallique placé, au moins en partie, dans une rainure longitudinale (20) formée à la surface inférieure de ladite bande d'usure (2).

Les figures 7a à 7i illustrent, à titre d'exemples, la grande variété de réalisations possibles, en ce qui concerne le profilé (5), la forme de ladite rainure longitudinale (20) et la forme et la présence éventuelle de ladite gorge longitudinale (42) sur la base (44) de l'étrier (4).

Au lieu de placer ledit profilé dans une rainure, relativement facile à former par usinage, on peut aussi placer ledit profilé ou tube métallique (5) dans un alésage longitudinal formé dans la masse de ladite bande d'usure (2).

Pour que ledit profilé (5) puisse jouer son rôle de protecteur du fil caténaire (6), et comme cela apparaît clairement sur les figures 5 et 6, la cote supérieure dudit profilé étanche (5) doit être supérieure à la cote supérieure des rebords latéraux (40) dudit étrier (4), d'au moins l'épaisseur dudit profilé, de manière à ce que, après usure ou en cas de rupture de ladite bande d'usure (2), ledit fil caténaire (6) vienne au contact dudit profilé (5) et le perce avant d'entrer en contact avec lesdits rebords latéraux (40).

Il est avantageux selon l'invention que ledit profilé (5) possède un degré de liberté suffisant dans la direction longitudinale pour pouvoir se dilater/se contracter dans cette direction sans altération des performances dudit frotteur.

En outre, il est avantageux qu'il en soit ainsi du point de vue de la facilité du montage puisque la fixation dudit profilé s'opère automatiquement par assemblage de ladite bande d'usure (2) avec ledit étrier (4), assemblage qui entraîne le coincement dudit profilé (5).

Comme déjà indiqué, un des problèmes à résoudre est l'échauffement dudit frotteur (1), et en particulier de ladite bande d'usure (2) lorsque ledit matériel roulant est alimenté par des courants de forte intensité. La solution selon l'invention vise à ce qu'une partie du courant circulant entre le fil caténaire (6) et les câbles (7) passent par ledit profilé conducteur électrique (5). Il convient donc selon l'invention de choisir l'épaisseur et la section dudit profilé (5) en fonction notamment de la fraction de la densité totale de courant, correspondant audit transfert d'énergie électrique, devant circuler dans ledit profilé (5). De préférence, l'épaisseur et la section dudit profilé (5) sont choisis de manière à assurer le transfert longitudinal d'au moins 10 % de la densité totale de courant transférée entre fil caténaire et matériel roulant.

Pour des raisons pratiques, ledit profilé (5) est, de préférence, un tube métallique, bon conducteur électrique, choisi parmi les tubes en Cu et alliages de Cu, Al et alliages d'Al. On choisit de préférence des métaux et alliages les plus légers et le plus conducteurs possibles. La résistivité électrique à la température ambiante est de préférence inférieure à 20 µΩ.cm, et de préférence encore inférieure à 12 µΩ.cm.

De façon à ce qu'une densité de courant significative puisse circuler dans ledit profilé, ledit profilé (5) présente avantageusement une section de surface de conducteur au moins égale à 10 mm², et de préférence supérieure à 50 mm². La densité de courant pouvant passer par mm² d'un conducteur électrique en cuivre est typiquement de l'ordre de 5 A. Pour des raisons d'ordre pratique, la section de surface dudit profilé est généralement inférieure à 100 mm².

Pour diminuer la résistivité de la bande d'usure (2), il est également avantageux que ladite bande d'usure (2) soit constituée de graphite imprégné de cuivre.

Selon une modalité de l'invention, le frotteur (1) comprend des câbles (7) scellés dans ladite bande d'usure en vue du transfert d'énergie du fil caténaire audit matériel roulant. Mais la présence de tels câbles n'est pas obligatoire dans la mesure où le transfert d'énergie pourrait aussi se faire par l'étrier (4) ou par des câbles soudés à la couche métallique mince (8) déposée sur la base de la bande d'usure (2).

Le fil caténaire (6) est en alliage de cuivre, typiquement un alliage de type CuAl. De manière à minimiser tout risque d'endommagement du fil caténaire (6), le matériau constituant ledit profilé (5) peut présenter, de préférence, une dureté moindre que celle du fil caténaire (6).

De manière avantageuse, ledit profilé (5) présente des propriétés de conductivité thermique associées à ses propriétés de conductivité électrique. Il peut donc être utilisé pour le refroidissement de ladite bande d'usure, éventuellement en faisant circuler un fluide dans ledit profilé, ou encore en reliant ledit profilé à tout moyen d'échange thermique pouvant évacuer des calories. De préférence, la conductivité thermique est supérieure à 0,1 W/cm.K, et de préférence encore supérieure à 1 W/cm.K.

### Exemple de réalisation

A titre d'exemple non limitatif, on a fabriqué le frotteur en carbone représenté aux figures 1 à 5 avec les dimensions spécifiées sur lesdites figures.

La bande d'usure (2) est en graphite imprégné de 20% en poids de cuivre. La partie inférieure de ladite bande d'usure a été soumise à un dépôt électrolytique de cuivre, de manière à former une couche de cuivre d'environ 10 µm d'épaisseur nécessaire pour pouvoir souder ladite bande d'usure aux rebords (40) de l'étrier (4). L'étrier (4) est en acier. Le profilé (5) est un tube de cuivre de 10 mm de diamètre et de 0,5 mm d'épaisseur, qui présente une surface de section de conducteur égale à 15 mm².

L'assemblage dudit frotteur (1) est réalisé par sertissage de ladite bande d'usure (2) dans les rebords (40) de l'étrier (4) et par soudure desdits rebords (40) avec la partie en regard de ladite bande d'usure (2), après qu'une couche de soudure (9) ait été déposée entre les rebords (40) et la partie en regard de ladite bande d'usure (2).

Le profilé (5) est fixé lors du sertissage de ladite bande d'usure (2) dans les rebords (40) de l'étrier (4) et est donc coincé entre ladite bande d'usure et ledit étrier, ce qui rend possible toutefois toute dilatation / contraction longitudinale lors de l'échauffement / refroidissement dudit frotteur.

Comme on peut le voir sur les figures 2, 3 et 4, quatre trous de scellement (23) ont été formés dans ladite bande d'usure (2) de part et d'autre des pattes de fixation (41) - soit huit trous en tout, de manière à sceller les extrémités de câbles conducteurs (7). Ces câbles conducteurs ne sont pas, dans cet exemple de réalisation, en contact électrique avec ledit profilé (5). Par contre, comme illustré à la figure 4, ces câbles conducteurs sont en contact électrique avec les pattes de fixation (41), elles-mêmes en contact électrique avec l'étrier (4) et soudées à ce dernier.

Le frotteur en carbone selon l'invention a été testé sur des trains à grande vitesse (TGV) sur pantographe instrumenté notamment pour mesurer la température de ladite bande d'usure (2).

On a observé que, dans le cas d'une alimentation électrique à basse tension et à intensité élevée (1100 A), la température maximale atteinte dans ladite bande d'usure était d'environ 300 °C, contre une température pouvant atteindre 600 °C avec un frotteur selon l'état de la technique. Une aussi grande différence de température entraîne des effets importants : en effet, d'une part, les soudures ou brasures utilisés fondent ou risquent de fondre à des températures supérieures à 300 °C, d'autre part, les risques d'oxydation et de fragilisation de la bande d'usure augmentent, semble-t-il, avec la température. Il est possible que, les risques de chocs thermiques étant moindres, les risques d'apparition de fissures soient moindres avec le frotteur selon l'invention qu'avec ceux connus par l'état de la technique.

Par ailleurs, la présence éventuelle de fissures dans ladite bande d'usure (2) selon l'invention n'a eu aucune conséquence et n'a pas déclenché le retrait du pantographe et l'arrêt inutile du TGV.

Selon la présente invention, le retrait du pantographe, suite au percement du profilé (5) par frottement ou formation d'arcs avec le fil caténaire, a lieu essentiellement pour protéger la ligne TGV et prévenir l'endommagement du fil caténaire (6) : il est toujours préférable d'arrêter un TGV plutôt que de risquer d'endommager plusieurs kilomètres de ligne TGV - par contre il serait totalement inopportun d'arrêter un TGV en rase campagne simplement parce que la bande d'usure du frotteur serait fissurée. Il s'agit donc de se prémunir contre les risques d'accidents graves pouvant entraîner l'endommagement de la ligne TGV, et non pas de détecter tout début d'endommagement de ladite bande d'usure, la surveillance de l'usure des bandes d'usure des frotteurs (1) et leur remplacement par suite de leur usure normale relevant par ailleurs des mesures courantes de maintenance.

### Avantages de l'invention

En s'orientant dans une direction différente de celles divulguées par l'état de la technique, l'invention a pu résoudre de manière simple et économique les problèmes posés par les frotteurs connus par l'état de la technique.

L'invention ne se limite donc pas aux seuls moyens déjà décrits, mais, en outre, elle ouvre la voie à de nombreuses modalités de réalisation basées sur le contrôle de la température dudit frotteur par emploi d'au moins un profilé conducteur électrique de géométrie adapté.

En effet, si besoin était, il serait possible selon l'invention de diminuer encore la température dudit frotteur, par exemple, par adjonction audit profilé tubulaire d'au moins un autre profilé (non tubulaire) en matériau conducteur thermique et électrique destiné à contribuer au transport du courant et au transfert de calories en vue du refroidissement de la partie centrale, la plus chaude, de ladite bande d'usure.

## Revendications

1. Frotteur en carbone (1) à détecteur d'avaries servant au transfert d'énergie d'un fil caténaire (6) à un matériel roulant, comprenant une bande d'usure (2) montée sur un étrier (4) fixé à un pantographe, ladite bande d'usure (2) comprenant du graphite et étant munie d'une enceinte longitudinale étanche contenant un fluide reliée à un dispositif de détection (3) de sorte que, en cas d'usure excessive ou en cas de rupture de ladite bande d'usure, il y ait rupture ou perçage de ladite enceinte entraînant un changement de pression dudit fluide, la détection de ce changement provoquant le retrait du pantographe et de l'étrier (4) supportant ladite bande d'usure (2) avant tout endommagement excessif des moyens de transfert d'énergie, **caractérisé en ce que** ladite enceinte longitudinale est constituée par un profilé tubulaire étanche (5) en un matériau stable thermiquement au moins jusqu'à 400°C, de dureté inférieure à 4 (échelle de Moh), et de conductivité électrique au moins supérieure à celle du graphite, de manière à servir de conducteur électrique lors du transfert d'énergie électrique de ladite bande d'usure audit matériel roulant.

2. Frotteur selon la revendication 1 dans lequel ledit profilé (5) est un tube métallique placé, au moins en partie, dans une rainure longitudinale formée à la surface inférieure de ladite bande d'usure.

3. Frotteur selon la revendication 1 dans lequel ledit profilé (5) est un tube métallique placé dans un alésage longitudinal formé dans la masse de ladite bande d'usure.

4. Frotteur selon une quelconque des revendications 1 à 3 dans lequel la cote supérieure dudit profilé étanche (5) est supérieure à la cote supérieure des rebords latéraux (40) dudit étrier (4), de manière à ce que, après usure ou en cas de rupture de ladite bande d'usure (2), ledit fil caténaire (6) vienne au contact dudit profilé (5) et le perce avant d'entrer en contact avec lesdits rebords latéraux (40).

5. Frotteur selon la revendication 4 dans lequel ledit profilé (5) possède un degré de liberté suffisant dans la direction longitudinale pour pouvoir se dilater/se contracter dans cette direction sans altération des performances dudit frotteur.

6. Frotteur selon une quelconque des revendications 1 à 5 dans lequel l'épaisseur et la section dudit profilé (5) sont choisies en fonction notamment de la fraction de la densité totale de courant, correspondant audit transfert d'énergie électrique, devant circuler dans ledit profilé (5).

7. Frotteur selon la revendication 6 dans lequel l'épaisseur et la section dudit profilé (5) sont choisis de manière à assurer le transfert longitudinal d'au moins 10 % de la densité totale de courant transférée entre fil caténaire et matériel roulant.

8. Frotteur selon une quelconque des revendications 1 à 7 dans lequel ledit profilé (5) est un tube métallique choisi parmi les tubes en Cu et alliages de Cu , Al et alliages d'Al.

9. Frotteur selon une quelconque des revendications 1 à 8 dans lequel ledit profilé (5) présente une section de surface de conducteur au moins égale à 10 mm², et de préférence supérieure à 50 mm².

10. Frotteur selon une quelconque des revendications 1 à 9 dans lequel ladite bande d'usure (2) est constituée de graphite imprégné de cuivre.

11. Frotteur selon une quelconque des revendications 1 à 10 comprenant des câbles (7) scellés dans ladite bande d'usure en vue du transfert d'énergie du fil caténaire audit matériel roulant.

12. Frotteur selon une quelconque des revendications 1 à 11 dans lequel le matériau constituant ledit profilé (5) présente une dureté moindre que celle du fil caténaire (6).

13. Frotteur selon une quelconque des revendications 1 à 12 dans lequel ledit profilé présente des propriétés de conductivité thermique et est utilisé pour le refroidissement de ladite bande d'usure.

## Claims

1. Carbon current collecting shoe (1) with damage detection used to transfer energy from a catenary wire (6) to rolling stock, comprising a wearing strip (2) mounted on a sheath (4) fixed to a pantograph, said wearing strip (2) comprising graphite and being provided with a sealed longitudinal chamber containing a fluid and connected to a detection device (3) such that, if there is any excessive wear in said wearing strip or if it should break, then said chamber will break or be perforated causing a change in said fluid pressure, the detection of this change causing the pantograph and the sheath (4) supporting said wearing strip (2) to be withdrawn before excessive damage is caused to energy transfer equipment, **characterized in that** said longitudinal chamber is composed of a sealed tubular section (5) made of a material that remains thermally stable to a temperature of up to at least 400°C, with a hardness of less than 4 (Mohs scale) and with electrical conductivity at least better than that of graphite, in order to act as an electrical conductor in transferring electrical energy from said wearing strip to said rolling stock.

2. Current collecting shoe according to claim 1, in which said section (5) is a metal tube placed, at least partly, in a longitudinal slot formed on the lower surface of said wearing strip.

3. Current collecting shoe according to claim 1, in which said section (5) is a metal tube placed inside a longitudinal reaming formed within the body of said wearing strip.

4. Current collecting shoe according to any one of claims 1 to 3, in which the elevation of the top of said sealed section (5) is higher than the elevation of the top of the side upstands (40) of said sheath (4), such that after wear or breakage of said wearing strip (2), said catenary wire (6) comes into contact with said section (5) and perforates it before coming into contact with said side upstands (40).

5. Current collecting shoe according to claim 4 in which said section (5) has sufficient degree of freedom in the longitudinal direction to be able to expand / contract in this direction without affecting the performances of said current collecting shoe.

6. Current collecting shoe according to any one of claims 1 to 5 in which the thickness and the area of said section (5) are chosen particularly as a function of the fraction of the total current density corresponding to said transfer of electrical energy that has to circulate in said section (5).

7. Current collecting shoe according to claim 6, in which the thickness and the area of said section (5) are chosen to transfer in the longitudinal direction at least 10% of the total current density transferred between the catenary wire and the rolling stock.

8. Current collecting shoe according to any one of claims 1 to 7 in which said section (5) is a metal tube chosen among the Cu, Cu alloy, Al and Al alloy tubes.

9. Current collecting shoe according to any one of claims 1 to 8 in which said section (5) has a conductor surface area of at least 10 mm², and preferably greater than 50 mm².

10. Current collecting shoe according to any one of claims 1 to 9, in which said wearing strip (2) is composed of graphite impregnated with copper.

11. Current collecting shoe according to any one of claims 1 to 10 comprising cables (7) anchored in said wearing strip for transfer of energy from the catenary wire to said rolling stock.

12. Current collecting shoe according to any one of claims 1 to 11, in which the material making up said section (5) is less hard than the catenary wire (6).

13. Current collecting shoe according to any one of claims 1 to 12, in which said section has thermal conductivity properties and is used to cool said wearing strip.

## Patentansprüche

1. Kohleschleifstück (1) mit Fehlersensor zur Energieübertragung von einem Fahrdraht (6) auf ein rollendes Material, mit einer Schleifleiste (2) montiert auf einem Bügel (4), welcher an einem Stromabnehmer befestigt ist, wobei die Schleifleiste (2) Graphit aufweist und mit einem dichten Längsgehäuse versehen ist, welches ein mit einer Sensorvorrichtung (3) in Verbindung stehendes Fluid enthält, so dass es bei exzessivem Verschleiß oder bei Bruch der Schleifleiste zu einem Bruch oder Durchstoß des Gehäuses kommt, was zu einer Druckänderung des Fluids führt, wobei die Erkennung dieser Änderung den Rückzug des Stromabnehmers und des Bügels (4), der die Schleifleiste (2) trägt, bewirkt, bevor es zu einer exzessiven Beschädigung der Energieübertragungsmittel kommt, **dadurch gekennzeichnet, dass** das Längsgehäuse aus einem dichten Rohrprofil (5) gebildet ist, welches aus einem Material besteht, das bis mindestens 400°C thermisch stabil ist und eine Härte kleiner 4 (Mohssche Härteskala) und eine elektrische Leitfähigkeit aufweist, die mindestens höher ist als die des Graphits, um als elektrischer Leiter bei der elektrischen Energieübertragung von der Schleifleiste auf das rollende Material zu dienen.

2. Schleifstück nach Anspruch 1, bei dem das Profil (5) ein Metallrohr ist, das zumindest teilweise in einer an der Unterseite der Schleifleiste ausgebildeten Längsnut angeordnet ist.

3. Schleifstück nach Anspruch 1, bei dem das Profil (5) ein Metallrohr ist, das in einer in der Masse der Schleifleiste ausgebildeten Bohrung angeordnet ist.

4. Schleifstück nach irgendeinem der Ansprüche 1 bis 3, bei dem das obere Maß des dichten Profils (5) größer ist als das obere Maß der Seitenränder (40) des Bügels (4), so dass der Fahrdraht (6) nach Verschleiß oder bei Bruch der Schleifleiste (2) mit dem Profil (5) in Berührung kommt und es durchsticht, bevor er mit den Seitenrändern (40) in Berührung kommt.

5. Schleifstück nach Anspruch 4, bei dem das Profil (5) einen ausreichenden Freiheitsgrad in Längsrichtung aufweist, um sich in diese Richtung ausdehnen/zusammenziehen zu können, ohne dabei die Leistungen des Schleifstücks zu beeinträchtigen.

6. Schleifstück nach irgendeinem der Ansprüche 1 bis 5, bei dem die Dicke und der Querschnitt des Profils (5) insbesondere in Abhängigkeit von dem der elektrischen Energieübertragung entsprechenden Anteil der Gesamtstromdichte gewählt werden, der durch das Profil (5) fließen soll.

7. Schleifstück nach Anspruch 6, bei dem die Dicke und der Querschnitt des Profils (5) so gewählt werden, dass die Längsübertragung von mindestens 10 % der zwischen Fahrdraht und rollendem Material übertragenen Gesamtstromdichte gewährleistet ist.

8. Schleifstück nach irgendeinem der Ansprüche 1 bis 7, bei dem das Profil (5) ein Metallrohr ist, das unter den Rohren aus Cu oder Cu-Legierungen, Al und Al-Legierungen gewählt wird.

9. Schleifstück nach irgendeinem der Ansprüche 1 bis 8, bei dem das Profil (5) einen Leitflächenquerschnitt von mindestens 10 mm² und vorzugsweise mehr als 50 mm² aufweist.

10. Schleifstück nach irgendeinem der Ansprüche 1 bis 9, bei dem die Schleifleiste (2) aus kupferimprägniertem Graphit besteht.

11. Schleifstück nach irgendeinem der Ansprüche 1 bis 10, mit in der Schleifleiste vergossenen Kabeln (7) zur Energieübertragung vom Fahrdraht auf das rollende Material.

12. Schleifstück nach irgendeinem der Ansprüche 1 bis 11, bei dem das Material, aus dem das Profil (5) besteht, eine geringere Dichte als die Dichte des Fahrdrahts (6) aufweist.

13. Schleifstück nach irgendeinem der Ansprüche 1 bis 12, bei dem das Profil Wärmeleitfähigkeitseigenschaften aufweist und zur Kühlung der Schleifleiste verwendet wird.
